# EUROPÄISCHE PATENTSCHRIFT

(11) **EP 4 385 175 B1**
(45) Veröffentlichungstag und Bekanntmachung des Hinweises auf die Patenterteilung: **18.02.2026**
(21) Anmeldenummer: 22783303.5
(22) Anmeldetag: 09.09.2022
(51) Int. Cl.: H04L 12/46

(54) **KOMMUNIKATIONSSYSTEM UND KOMMUNIKATIONSVERFAHREN MIT EINER STATUSNACHRICHT**
COMMUNICATION SYSTEM AND COMMUNICATION METHOD USING A STATUS MESSAGE
SYSTÈME DE COMMUNICATION ET PROCÉDÉ DE COMMUNICATION UTILISANT UN MESSAGE D'ÉTAT

(30) Priorität: 29.09.2021 DE 102021210917
(43) Veröffentlichungstag der Anmeldung: 19.06.2024
(73) Patentinhaber: Siemens Mobility GmbH, 80997 München (DE)
(72) Erfinder: NEITE, Rudolf, 91301 Forchheim (DE); SCHWERING, Wolfgang, 91341 Röttenbach (DE); DAHMS, Frank, 91315 Höchstadt/Aisch (DE)
(74) Vertreter: Siemens Patent Attorneys
(86) Internationale Anmeldenummer: PCT/EP2022/075155
(87) Internationale Veröffentlichungsnummer: WO 2023/052088

(56) Entgegenhaltungen:
- EP-A1- 0 045 067
- US-A1- 2009 225 766
- US-A1- 2018 164 767

## Beschreibung

Die Erfindung betrifft ein Kommunikationssystem mit einem Kommunikationsnetzwerk sowie ein Kommunikationsverfahren zum Betreiben des Kommunikationsnetzwerks. Die Erfindung betrifft ferner eine Netzwerkkomponente. Das Kommunikationsnetzwerk umfasst eine erste Gruppe von Netzwerkkomponenten und eine zweite Gruppe von Netzwerkkomponenten. Die Netzwerkkomponenten weisen jeweils einen Port und einen weiteren Port auf, über die jeweils eine Netzwerkkomponente derselben ersten oder zweiten Gruppe datentechnisch verbunden ist. Die Netzwerkkomponenten weisen ferner jeweils einen Querport auf, über den eine Netzwerkkomponente der jeweiligen anderen Gruppe datentechnisch verbunden ist.

Die Offenlegungsschrift EP 0 045 067 A1) offenbart ein Zeitmultiplex-Vermittlungssystem mit einer Vielzahl von Vermittlungsmodulen zur Anrufbedienung sowie einer Vielzahl von Portschaltungen in jedem der Module.

Die deutsche Patentschrift DE 10 2004 030 561 B4 beschreibt eine Übertragungsvorrichtung für Schienenfahrzeugwagen. Ein primärer Repeater und ein sekundärer Repeater sind in jedem Schienenfahrzeugwagen installiert und jeweils konfiguriert, um von einem anderen Repeater übertragene Daten zu empfangen und um empfangene Daten an einen weiteren Repeater weiterzuleiten. Eine primäre Trunk-Leitung dient dazu, die primären Repeater miteinander zu verbinden. Eine sekundäre Trunk-Leitung dient dazu, die sekundären Repeater miteinander zu verbinden. Eine Trunk-Trunk-Leitung dient dazu, die primären und sekundären Repeater miteinander in jedem Schienenfahrzeugwagen zu verbinden. Ein Trunk-Sender-Empfänger ist in jedem Repeater installiert und konfiguriert, um Daten zu und von einem weiteren Repeater in einen anderen Schienenfahrzeugwagen zu übertragen und zu empfangen. Ein Trunk-Trunk-Sender-Empfänger ist in jedem Repeater installiert und konfiguriert, um Daten zu und von dem anderen Repeater in dem gleichen Schienenfahrzeugwagen zu übertragen und zu empfangen. Ein Repeater-Controller ist installiert und konfiguriert, um den Trunk-Sender-Empfänger und den Trunk-Trunk-Sender-Empfänger zu steuern und ein Netzwerk zu bilden. Ein Stations-Sender-Empfänger ist in jedem Repeater installiert und konfiguriert, um Daten zu und von dem Repeater-Controller zu übertragen und zu empfangen. Eine Station ist mit dem Stations-Sender-Empfänger verbunden und konfiguriert, um Daten zu und von dem Stations-Sender-Empfänger zu übertragen und zu empfangen, wobei die primäre Trunk-Leitung, die sekundäre Trunk-Leitung und die Trunk-Trunk-Leitungen ein leiterähnliches Übertragungsleitungsnetzwerk bilden. Jeder Repeater, der Daten von einem anderen Repeater empfängt, leitet die empfangenen Daten durch die Trunk-Trunk-Leitung zu einem weiteren Repeater in dem gleichen Schienenfahrzeugwagen und durch die Trunk-Leitung zu einem anderen Repeater in dem benachbarten Schienenfahrzeugwagen weiter. Jeder Repeater, der die gleichen Daten durch die Trunk-Leitung und durch die Trunk-Trunk-Leitung empfängt, leitet die zuerst empfangenen Daten weiter.

Vor diesem Hintergrund ist es Aufgabe der Erfindung, ein verbessertes Kommunikationssystem, eine verbesserte Netzwerkkomponente und ein verbessertes Kommunikationsverfahren anzugeben.

Diese Aufgabe wird durch die unabhängigen Ansprüche 1, 9, 10 und 11 definiert. Die abhängigen Ansprüche 2-8 definieren Implementierungsdetails der Erfindung.

Die Erfindung geht von Kommunikationssystemen aus, welche unter Anwendung des sogenannten Spanning-Tree-Protokolls (STP), insbesondere unter Anwendung des Multiple-Spanning-Tree-Protocol (MSTP), betrieben werden. Eine Besonderheit bei diesem Protokoll liegt darin, dass eine Netzwerkkomponente als sogenannte Root-Bridge bestimmt wird. Die Root-Bridge sendet sogenannte Bridge-Protocol-Data-Units (BPDUs) an alle weiteren Netzwerkkomponenten und stellt über die in den BPDU-Datenpaketen enthaltenen Konfigurationsdaten die Netzkonfiguration fest. Ein wesentlicher Nachteil dieser Verfahren liegt darin, dass die Dauer der Durchführung einer sogenannten Redundanzumschaltung vergleichsweise groß und hinsichtlich der Dauer nicht deterministisch (d. h. vorhersagbar) ist. Unter Redundanzumschaltung ist dabei zu verstehen, dass eine ausgefallene datentechnische Verbindung wieder verfügbar (beispielsweise durch Umgehung einer physikalischen Verbindung) gemacht wird. Demnach beruht die Erfindung zudem auf der Erkenntnis, dass kleine Redundanzumschaltzeiten (d. h. die Zeitdauer zwischen Ausfall und Wiederverfügbarkeit einer datentechnischen Verbindung) wünschenswert sind.

Die erfindungsgemäße Lösung behebt dieses Problem, indem die Netzwerkkomponenten eingerichtet sind, jeweils eine Statusnachricht auszusenden, welche die Portzustände der einzelnen Ports enthält. Auf Basis dieser Statusnachricht werden Netzwerkkomponenten, die die Statusnachricht empfangen, über die Portzustände der sendenden Netzwerkkomponenten in Kenntnis gesetzt. Diese Kenntnis kann für eine zeitnahe und deterministische Redundanzumschaltung genutzt werden.

Ein wesentlicher Vorteil der Erfindung liegt darin, dass auf eine Root-Bridge (wie sie aus STP bekannt ist) verzichtet werden kann. Stattdessen senden sämtliche Netzwerkkomponenten eine Statusnachricht, vorzugsweise nach Art einer Bridge-Protocol-Data-Unit (BPDU) aus. Anhand dieser Statusnachricht können Netzwerkkomponenten, die die Statusnachricht empfangen, auf die Portzustände der aussendenden Netzwerkkomponente reagieren und beispielsweise eigene Portzustände ändern, um eine Redundanzumschaltung auszulösen.

Das Kommunikationsnetzwerk ist vorzugsweise ein Local-Area-Network (LAN) und weiter vorzugsweise als Ethernet-Netzwerk ausgebildet.

Die Netzwerkkomponenten der ersten bzw. zweiten Gruppen sind vorzugsweise nach Art einer linienförmigen Netzwerktopologie miteinander verbunden.

Die jeweilige Netzwerkkomponente ist vorzugsweise ein Switch, weiter vorzugsweise ein Ethernet-Switch. Der jeweilige Port der Netzwerkkomponente bildet insbesondere einen Eingang für den Empfang von Daten und Ausgang für das Aussenden von Daten.

Die über den ersten und weiteren Port bereitgestellte datentechnische Verbindung zu der Netzwerkkomponente derselben Gruppe und die über den Querport bereitgestellte datentechnische Verbindung zu der Netzwerkkomponente der anderen Gruppe erfolgt beispielsweise durch einen kabelgebundenen Anschluss der Netzwerkkomponente derselben oder anderen Gruppe an den Port.

Die Statusnachricht ist vorzugsweise nach Art einer Bridge-Protocol-Data-Unit (BPDU) aufgebaut.

Der Portzustand kann beispielsweise ein erster Zustand sein, in dem eingehende oder ausgehende Datenframes verworfen werden und eine eingehende Statusnachricht nicht empfangen und verarbeitet wird. Diese Art des Portzustands wird fachmännisch häufig als "Discarding" bezeichnet. Der Portzustand kann beispielsweise ein zweiter Zustand sein, in dem eingehende oder ausgehende Datenframes weitergeleitet werden und eine eingehende Statusnachricht empfangen, verarbeitet und übertragen wird. Diese Art des Portzustands wird fachmännisch häufig als "Forwarding" bezeichnet. Die Ports können weitere nicht beschriebene Portzustände einnehmen.

Gemäß einer bevorzugten Ausführungsform des erfindungsgemäßen Kommunikationssystems ist die jeweilige Netzwerkkomponente eingerichtet, die Statusnachricht an dem Port, an dem weiteren Port und an dem Querport auszusenden. Die Statusnachricht enthält eine Netzwerkkomponentennummer, welche die Netzwerckomponente identifiziert. Die Statusnachricht enthält ferner eine Portnummer, welche den Port, den weiteren Port oder den Querport der Netzwerkkomponente, von dem die Statusnachricht ausgeht, identifiziert.

Dies stellt eine besonders zweckmäßige Ausführung der Statusnachricht dar, anhand derer die empfangenden Netzwerkkomponenten eine Redundanzumschaltung auslösen und/oder durchführen können.

Die Portnummer umfasst beispielsweise eine logische Portnummer, welche den ersten Port, den weiteren Port und den Querport identifiziert. Zusätzlich umfasst die Portnummer beispielsweise eine reale Portnummer.

Nach einer weiteren bevorzugten Ausführungsform des erfindungsgemäßen Kommunikationssystems sind die Netzwerkkomponenten gemäß einer Leiterstruktur datentechnisch miteinander verbunden. Die erste Gruppe ist nach Art eines ersten Leiterholms der Leiterstruktur und die zweite Gruppe nach Art eines zweiten Leiterholms der Leiterstruktur datentechnisch miteinander verbunden. Die erste Gruppe und zweite Gruppe sind datentechnisch miteinander über die jeweiligen Querports nach Art einer Leitersprosse der Leiterstruktur verbunden.

Die Leiterstruktur ist insbesondere die Netzwerktopologie, nach der die Netzwerkkomponenten miteinander verbunden sind. D. h. die Netzwerkkomponenten müssen nicht räumlich gemäß der Leiterstruktur angeordnet sein, um diese Netzwerktopologie auszubilden.

Bei einer bevorzugten Weiterbildung sind die Netzwerkkomponenten eingerichtet, eine Redundanzumschaltung anhand einer empfangenen Statusnachricht auszuführen, bei welcher mittels der Netzwerkkomponenten ein Kommunikationspfad für eine datentechnische Verbindung zwischen zwei Netzwerkkomponenten gewählt wird. Der Kommunikationspfad umgeht eine ausgefallene datentechnische Verbindung zwischen den zwei Netzwerkkomponenten über die Leiterstruktur.

Diese Weiterbildung verdeutlicht, dass die Leiterstruktur besonders für eine Redundanzumschaltung bei einem erfindungsgemäßen Kommunikationssystem geeignet ist. Zudem zeigt die Weiterbildung eine vorteilhafte Art und Weise der Redundanzumschaltung bei dem erfindungsgemäßen Kommunikationssystem auf.

Vorzugsweise wird im Fall des Ausfalls einer datentechnischen Verbindung zwischen zwei Netzwerkkomponenten der ersten bzw. zweiten Gruppe ein alternativer Kommunikationspfad über Netzwerkkomponenten der zweiten bzw. ersten Gruppe gewählt.

Gemäß einer besonders bevorzugten Ausführungsform des erfindungsgemäßen Kommunikationssystems ist das Kommunikationsnetzwerk ein Netzwerk eines spurgebundenen Fahrzeugs. Das spurgebundene Fahrzeug umfasst mehrere Wagen, wobei in jedem Wagen ein Paar von Netzwerkkomponenten angeordnet ist. Das jeweilige Paar umfasst eine Netzwerkkomponente der ersten Gruppe und eine Netzwerkkomponente der zweiten Gruppe, die über die Querports miteinander verbunden sind.

Diese Ausführungsform stellt eine besonders zweckmäßige und wünschenswerte Art des Einsatzes des erfindungsgemäßen Kommunikationssystems dar.

Das Kommunikationsnetzwerk ist vorzugsweise ein Moving-Local-Area-Network (MLAN) des spurgebundenen Fahrzeugs.

Vorzugsweise enthält die Statusnachricht eine Wagennummer, die einen Wagen repräsentiert, in dem die Netzwerkkomponente, welche die Statusnachricht aussendet, angeordnet ist.

Vorzugsweise wird im Fall des Ausfalls einer datentechnischen Verbindung zwischen zwei Netzwerkkomponenten, die ein Paar bilden, ein alternativer Kommunikationspfad über Netzwerkkomponenten, die ein weiteres Paar in einem anderen Wagen bilden, gewählt.

Bei einer bevorzugten Weiterbildung dient das Kommunikationsnetz als Steuerungsnetz und als Betreibernetz des spurgebundenen Fahrzeugs.

Mit anderen Worten: Das Steuerungsnetz und das Betreibernetz werden von einem gemeinsamen Netzwerk gebildet. Im Unterschied dazu sind das Steuerungsnetz und das Betreibernetz bei bisherigen Lösungen physikalisch und/oder logisch voneinander getrennt.

Die Ausbildung des Steuerungsnetzwerks und des Betreibernetzwerks als ein gemeinsames Netzwerk reduziert die Kosten für die Verkabelung, die Anzahl an Netzwerkkomponenten und den Bauraum. Zudem wird der Aufwand für Netzwerkänderungen reduziert. Außerdem wird der Betrieb, die Administration und die Wartung (OAM: Operation, Administration and Maintenance) sowie die Konfiguration und Software-Updates vereinfacht. Schließlich können funktionale Neuerungen, beispielsweise Time Sensitive Networking (TSN), einfacher eingeführt werden, da diese nicht für jede Netzwerkdomäne (Steuerungsnetz und Betreibernetz) einzeln erfolgen müssen.

Das erfindungsgemäße Kommunikationssystem eignet sich besonders für die Ausbildung des Steuerungsnetzes und Betreibernetzes als ein gemeinsames Netzwerk (d. h. konvergiert): Denn die Dauer der Redundanzumschaltung wird durch das erfindungsgemäße Kommunikationssystem verkürzt. Dadurch kann das erfindungsgemäße Kommunikationssystem besonders zweckmäßig für diese Art von konvergierten Kommunikationsnetzen eingesetzt werden. Denn die in Netzen dieser Art vorgegebenen Maximalwerte für Redundanzumschaltzeiten können durch das erfindungsgemäße Kommunikationssystem erfüllt werden. Diese Maximalwerte sind bei den unterschiedlichen an das Kommunikationsnetz angeschlossenen Subsystemen - wie das Fahrgastinformationssystem (FIS), das Kameraüberwachungssystem (CCTV: Closed Circuit Television), die Fahrzeugsteuerung, etc. - jeweils unterschiedlich vorgegeben.

Der Fachmann versteht den Begriff "Steuerungsnetz" als ein Netz, welches eine oder mehrere Komponenten zur Fahrzeugsteuerung umfasst. Dieses Verständnis basiert auf der Kenntnis, dass in heutigen Schienenfahrzeugen - neben den klassischen leittechnischen (z. B. antriebs- und bremstechnischen) Funktionen - zahlreiche Aufgaben automatisiert durchgeführt werden. Dazu gehören z. B. der Betrieb und die Verwaltung eines Systems zur Ausgabe von Informationen an Fahrgäste und Bordpersonal, der automatisierte Betrieb einer Sanitärzelle, die Verwaltung einer Kommunikation zwischen dem Schienenfahrzeug und der Landseite, etc. Die entsprechenden Komponenten sind steuerungs- und kommunikationstechnisch über das Steuernetz miteinander verbunden.

Des Weiteren versteht der Fachmann den Begriff "Betreibernetz" als ein physikalisch und/oder logisch von dem Steuernetz getrenntes Netz. Beispielsweise ist das Fahrgastinformationssystem (FIS) und/oder das Kameraüberwachungssystem zur Überwachung des Innen- und Außenbereichs des Schienenfahrzeugs (CCTV) an das Betreibernetz datentechnisch angebunden. Die entsprechenden Komponenten des FISs bzw. Kameraüberwachungssystems sind kommunikationstechnisch über das Betreibernetz miteinander verbunden.

Die Erfindung betrifft ferner ein spurgebundenes Fahrzeug mit einem Kommunikationsnetzwerk der vorstehend beschriebenen Art.

Die oben genannte Aufgabe wird ferner durch eine Netzwerkkomponente einer ersten oder zweiten Gruppe von Netzwerkkomponenten gelöst. Die Netzwerkkomponente umfasst einen Port und einen weiteren Port, welche jeweils eingerichtet sind, eine datentechnische Verbindung mit einer Netzwerkkomponente derselben ersten oder zweiten Gruppe bereitzustellen. Die Netzwerkkomponente umfasst ferner einen Querport, welcher eingerichtet ist, eine datentechnische Verbindung mit einer Netzwerkkomponente der jeweiligen anderen Gruppe bereitzustellen. Die Netzwerkkomponente ist eingerichtet, jeweils in regelmäßigen zeitlichen Abständen eine Statusnachricht auszusenden. Die Statusnachricht enthält eine Portzustandsinformation, welche einen Portzustand des Ports, einen Portzustand des weiteren Ports und einen Portzustand des Querports repräsentiert.

Die oben genannte Aufgabe wird ferner durch ein Kommunikationsverfahren zum Betreiben eines Kommunikationsnetzwerks gelöst, welches eine erste Gruppe von Netzwerkkomponenten und eine zweite Gruppe von Netzwerkkomponenten umfasst. Die Netzwerkkomponenten weisen jeweils einen Port und einen weiteren Port auf, über die eine Netzwerkkomponente derselben ersten oder zweiten Gruppe datentechnisch verbunden ist. Die Netzwerkkomponenten weisen zudem einen Querport auf, über den eine Netzwerkkomponente der jeweiligen anderen Gruppe datentechnisch verbunden ist. Bei dem Kommunikationsverfahren senden die Netzwerkkomponenten jeweils in regelmäßigen zeitlichen Abständen eine Statusnachricht aus. Die Statusnachricht enthält eine Portzustandsinformation, welche einen Portzustand des Ports, einen Portzustand des weiteren Ports und einen Portzustand des Querports repräsentiert.

Die Erfindung betrifft ferner ein Computerprogrammprodukt, umfassend Befehle, die bei der Ausführung des Programms durch eine Recheneinrichtung diese veranlassen, das Kommunikationsverfahren der vorstehend beschriebenen Art auszuführen.

Die Erfindung betrifft ferner eine Bereitstellungsvorrichtung für das Computerprogrammprodukt der vorstehend beschriebenen Art, wobei die Bereitstellungsvorrichtung das Computerprogrammprodukt speichert und/oder bereitstellt. Die Bereitstellungsvorrichtung ist beispielsweise eine Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Kommunikationsverfahren auf einem Computer zur Ausführung gebracht wird. Der Computer ist beispielsweise eine Recheneinrichtung der Netzwerkkomponente.

Zu Vorteilen, Ausführungsformen und Ausgestaltungsdetails des erfindungsgemäßen spurgebundenen Fahrzeugs, der erfindungsgemäßen Netzwerkkomponente, des erfindungsgemäßen Kommunikationsverfahrens, des erfindungsgemäßen Computerprogrammprodukts und der erfindungsgemäßen Bereitstellungsvorrichtung kann auf die vorstehende Beschreibung zu den entsprechenden Merkmalen des erfindungsgemäßen Kommunikationssystems verwiesen werden.

Ein Ausführungsbeispiel der Erfindung wird anhand der Zeichnungen erläutert. Es zeigen:
- Figur 1: schematisch den Aufbau eines Ausführungsbeispiels eines erfindungsgemäßen Kommunikationssystems,
- Figur 2: schematisch den Ablauf eines Ausführungsbeispiels eines erfindungsgemäßen Kommunikationsverfahrens,
- Figur 3: eine schematische Darstellung einer Leiterstruktur gemäß dem Ausführungsbeispiel des erfindungsgemäßen Kommunikationssystems und
- Figur 4: eine weitere Darstellung des Ausführungsbeispiels des erfindungsgemäßen Kommunikationssystems.

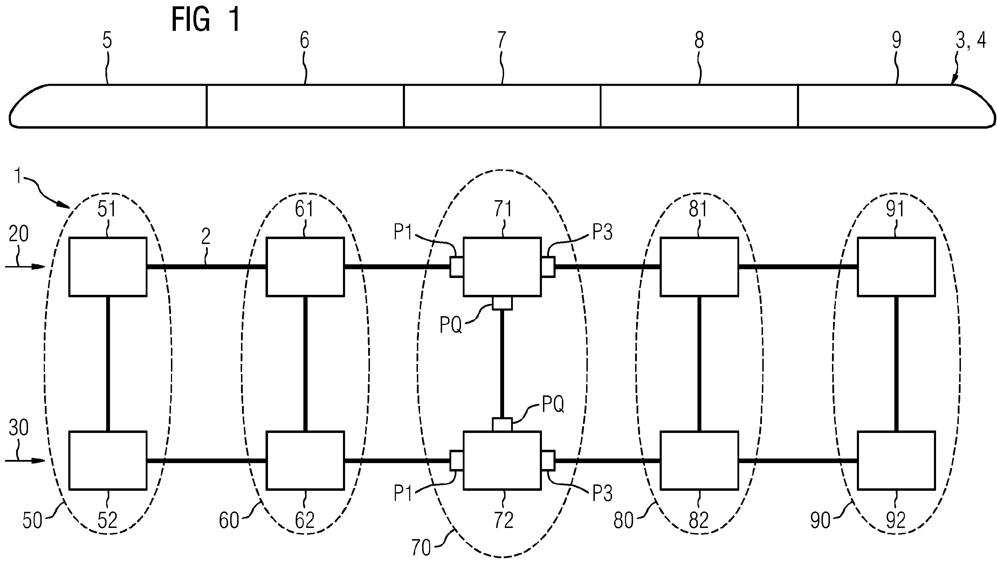

Figur 1 zeigt eine schematische Darstellung eines Kommunikationssystems 1 mit einem Kommunikationsnetzwerk 2, welches in Bezug zu einem spurgebundenen Fahrzeug 3 gezeigt ist und physikalisch auf dem spurgebundenen Fahrzeug 3 installiert ist.

Das spurgebundene Fahrzeug 3 ist ein Schienenfahrzeug 4, beispielsweise ein Triebzug, mit mehreren Wagen 5 bis 9. Die Wagen 5 und 9 sind Endwagen. Die Wagen 6 bis 8 sind zwischen den Endwagen 5 und 9 angeordnet.

Das Kommunikationsnetzwerk 2 umfasst mehrere Netzwerkkomponenten 51, 52, 61, 62, 71, 72, 81, 82, 91, 92, die physikalisch und datentechnisch miteinander verbunden und jeweils als Switch ausgebildet sind. Die Netzwerkkomponenten 51, 61, 71, 81 und 91 bilden eine erste Gruppe 20. Die Netzwerkkomponenten 52, 62, 72, 82 und 92 bilden eine zweite Gruppe 30.

Die Netzwerkkomponenten 51, 52, 61, 62, 71, 72, 81, 82, 91, 92 weisen jeweils einen ersten Port P1, einen zweiten (Quer-)Port PQ und einen dritten Port P3 auf.

Über den ersten Port P1 ist die Netzwerkkomponente 61, 71, 81 bzw. 91 der ersten Gruppe 20 mit der Netzwerkkomponente 51, 61, 71 bzw. 81 der ersten Gruppe 20 datentechnisch verbunden. Zudem ist die Netzwerkkomponente 62, 72, 82 bzw. 92 der zweiten Gruppe 30 über den ersten Port P1 mit der Netzwerkkomponente 52, 62, 72 bzw. 82 der zweiten Gruppe 30 datentechnisch verbunden.

Über den dritten Port P3 ist die Netzwerkkomponente 51, 61, 71 bzw. 81 der ersten Gruppe 20 mit der Netzwerkkomponente 61, 71, 81 bzw. 91 der ersten Gruppe 20 verbunden. Zudem ist die Netzwerkkomponente 52, 62, 72 bzw. 82 der zweiten Gruppe 30 über den dritten Port P3 mit der Netzwerkkomponente 62, 72, 82 bzw. 92 der zweiten Gruppe 30 verbunden.

Die Netzwerkkomponenten 51 und 52 bilden ein Paar 50, welches in dem Wagen 5 angeordnet ist. Die Netzwerkkomponenten 61 und 62 bilden ein Paar 60, welches in dem Wagen 6 angeordnet ist. Die Netzwerkkomponenten 71 und 72 bilden ein Paar 70, welches in dem Wagen 7 angeordnet ist. Die Netzwerkkomponenten 81 und 82 bilden ein Paar 80, welches in dem Wagen 8 angeordnet ist. Die Netzwerkkomponenten 91 und 92 bilden ein Paar 90, welches in dem Wagen 9 angeordnet ist.

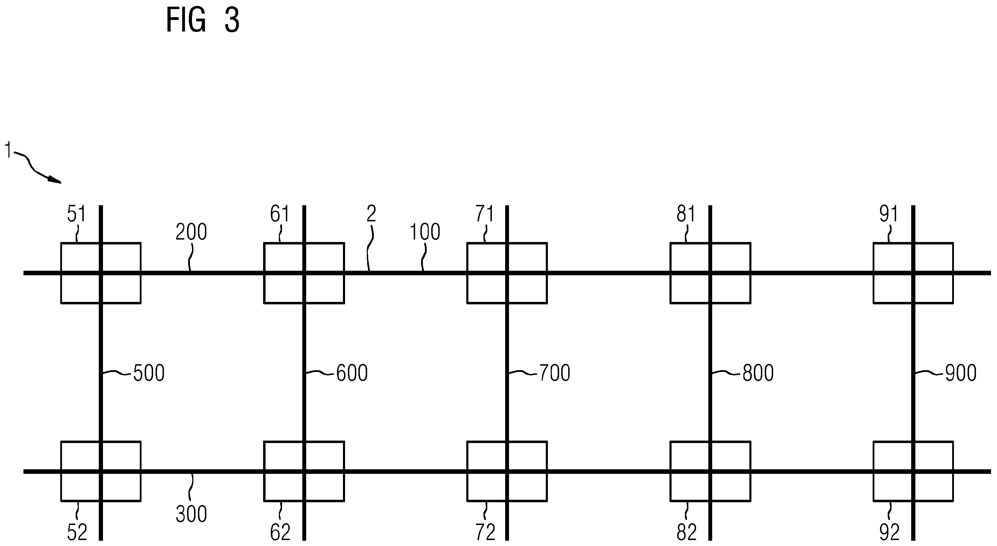

Die Netzwerkkomponenten sind nach Art einer Leiterstruktur datentechnisch miteinander verbunden. Die in Figur 3 gezeigte Leiterstruktur 100 verdeutlicht diese Netzwerktopologie. Das in Figur 3 gezeigte Kommunikationsnetzwerk 2 ist in gleicher Weise wie das in Figur 1 gezeigte Kommunikationsnetzwerk 2 aufgebaut. Gleiche und funktionsgleiche Elemente sind dabei mit denselben Bezugszeichen versehen.

Gemäß Figur 3 sind die Netzwerkkomponenten 51, 61, 71, 81 und 91 entlang des Leiterholms 200 linienförmig miteinander verbunden. Die Netzwerkkomponenten 52, 62, 72, 82 und 92 sind entlang des Leiterholms 300 linienförmig miteinander verbunden. Das jeweilige Paar 50, 60, 70, 80 bzw. 90 ist über den jeweiligen Querport (zweiten Port) PQ nach Art einer Leitersprosse 500, 600, 700, 800 bzw. 900 datentechnisch miteinander verbunden.

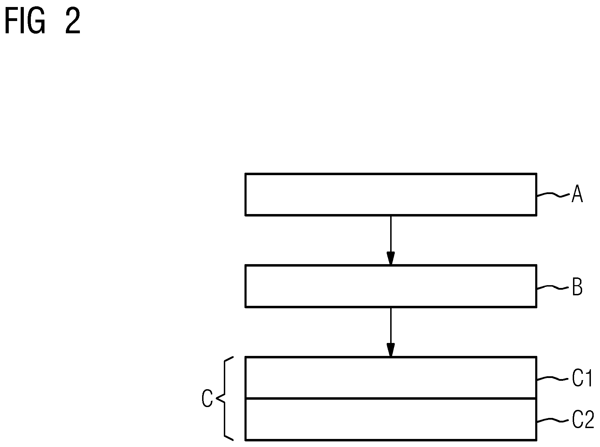

Figur 2 zeigt schematisch den Ablauf eines Ausführungsbeispiels des erfindungsgemäßen Kommunikationsverfahrens.

In einem Verfahrensschritt A senden die in Figur 1 gezeigten Netzwerkkomponenten zu einen Zeitpunkt T1 eine Statusnachricht aus. D. h. jede Netzwerkkomponente sendet die Statusnachricht über den ersten Port P1, den zweiten Port PQ und den dritten Port P3 aus.

Die Statusnachricht enthält die folgenden Informationen:
- eine Wagennummer des Wagens, in dem die Netzwerkkomponente, die die Statusnachricht aussendet, angeordnet ist,
- eine Netzwerkkomponentennummer, welche die Netzwerkkomponente identifiziert, welche die Statusnachricht aussendet,
- eine Portnummer, welche den ersten Port P1, den zweiten Port PQ und den dritten Port P3 identifiziert, an dem die Statusnachricht ausgesendet wurde, und
- eine Portzustandsinformation PZ, welche den Portzustand des ersten Ports P1, den Portzustand des zweiten Ports PQ und den Portzustand des dritten Ports P3 repräsentiert.

Der Portzustand kann beispielsweise ein erster Zustand D sein, in dem eingehende oder ausgehende Datenframes verworfen werden und eine eingehende Statusnachricht nicht empfangen und verarbeitet wird. Diese Art des Portzustands wird fachmännisch häufig als "Discarding" bezeichnet. Der Portzustand kann beispielsweise ein zweiter Zustand F sein, in dem eingehende oder ausgehende Datenframes weitergeleitet werden und eine eigehende Statusnachricht empfangen, verarbeitet und übertragen wird. Dieser Art des Portzustands wird fachmännisch häufig als "Forwarding" bezeichnet.

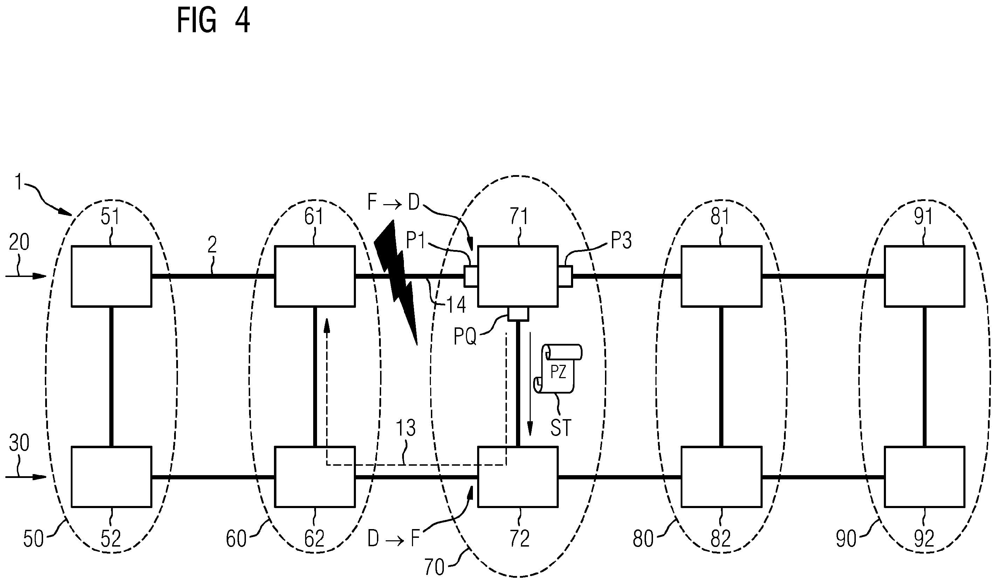

Im Folgenden wird der beispielhafte Fall betrachtet, bei dem die datentechnische Verbindung zwischen dem dritten Port P3 der Netzwerkkomponente 61 und ersten Port P1 der Netzwerkkomponente 71 ausfällt. Dieser Fall ist in Figur 4 dargestellt. Das in Figur 4 gezeigte Kommunikationsnetzwerk 2 ist in gleicher Weise wie das in den Figuren 1 und 3 gezeigte Kommunikationsnetzwerk 2 aufgebaut. Gleiche und funktionsgleiche Elemente sind daher mit denselben Bezugszeichen versehen.

In dem in Figur 4 gezeigten Fall hat der Port P1 der Netzwerkkomponente 71 den Portzustand D nach Ausfall der Verbindung 14 eingenommen. Die Statusnachricht ST, welche die Netzwerkkomponente in dem Verfahrensschritt A aussendet, wird in einem Verfahrensschritt B von der Netzwerkkomponente 72 empfangen. Anhand der Statusnachricht kann die Netzwerkkomponente 72 ermitteln, dass der Port P1 der Netzwerkkomponente 71 den Portzustand D hat.

Auf Basis der Kenntnis über die ausgefallene Verbindung wird in einem Verfahrensschritt C eine Redundanzumschaltung ausgeführt. Dabei wird in einem Verfahrensschritt C1 mittels den Netzwerkkomponenten ein Kommunikationspfad 13 gewählt, welcher die ausgefallene Verbindung zwischen Netzwerkkomponenten 61 und 71 umgeht. Im genannten Fall wird der alternative Kommunikationspfad 13 über die Netzwerkkomponenten 62 und 72 gewählt. Mit anderen Worten: Für den Ausfall der Verbindung zwischen den Netzwerkkomponenten 61 und 71 der ersten Gruppe 20 wird ein alternativer Kommunikationspfad über die Netzwerkkomponenten 62 und 72 der zweiten Gruppe 30 gewählt. Die Leiterstruktur 100 schafft dabei die Grundlage für die Wahl des alternativen Kommunikationspfads.

Die Netzwerkkomponente 72 löst den Kommunikationspfad 13 beispielsweise dadurch aus, dass der Port P1 der Netzwerkkomponente 72 in einem Verfahrensschritt C2 von dem Portzustand D nach F geschaltet wird, um die Kommunikation über den Kommunikationspfad 13 freizugeben.

Ein weiterer nicht gezeigter Beispielfall ist der Ausfall der datentechnischen Verbindung zwischen den Netzwerkkomponenten 62 und 72. In diesem Fall wird der Port P1 der Netzwerkkomponente 71 von dem Portzustand von D nach F geschaltet.

Ein weiterer nicht gezeigter Beispielfall ist der Ausfall der Netzwerkkomponente 71. In diesem Fall wird der Port P1 der Netzwerkkomponente 72 von dem Portzustand D nach F geschaltet und der Port P1 der Netzwerkkomponente 82 von dem Portzustand D nach F geschaltet.

## Patentansprüche

1. Netzwerkkomponente einer ersten oder zweiten Gruppe von Netzwerkkomponenten, umfassend:
- einen Port (P1) und einen weiteren Port (P3), welche jeweils eingerichtet sind, eine datentechnische Verbindung mit einer Netzwerkkomponente derselben ersten oder zweiten Gruppe (20, 30) bereitzustellen, **gekennzeichnet durch**
- einen Querport (PQ), welcher eingerichtet ist, eine datentechnische Verbindung mit einer Netzwerkkomponente der jeweiligen anderen Gruppe (30, 20) bereitzustellen, wobei
die Netzwerkkomponente (51, 52, 61, 62, 71, 72, 81, 82, 91, 92) eingerichtet ist, jeweils in regelmäßigen zeitlichen Abständen eine Statusnachricht (ST) auszusenden (A),
wobei die Statusnachricht (ST) eine Portzustandsinformation enthält, welche einen Portzustand (F, D) des Ports (P1), einen Portzustand des weiteren Ports (P3) und einen Portzustand des Querports (PQ) repräsentiert.

2. Kommunikationssystem mit einem Kommunikationsnetzwerk (2), welches eine erste Gruppe (20) von Netzwerkkomponenten (51, 61, 71, 81, 91) und eine zweite Gruppe (30) von Netzwerkkomponenten (52, 62, 72, 82, 92) umfasst, wobei die Netzwerkkomponenten jeweils nach Anspruch 1 definiert sind.

3. Kommunikationssystem nach Anspruch 2,
**dadurch gekennzeichnet, dass**
die jeweilige Netzwerkkomponente eingerichtet ist, die Statusnachricht an dem Port (P1), an dem weiteren Port (P3) und dem Querport (PQ) auszusenden und
die Statusnachricht (ST)
- eine Netzwerkkomponentennummer, welche die Netzwerkkomponente identifiziert, und
- eine Portnummer, welche den Port (P1), den weiteren Port (P3) oder Querport (PQ) der Netzwerkkomponente, von dem die Statusnachricht ausgeht, identifiziert,
enthält.

4. Kommunikationssystem nach Anspruch 2 oder 3,
**dadurch gekennzeichnet, dass**
die Netzwerkkomponenten gemäß einer Leiterstruktur datentechnisch miteinander verbunden sind,
wobei die erste Gruppe nach Art eines ersten Leiterholms (200) der Leiterstruktur (100) und die zweite Gruppe nach Art eines zweiten Leiterholms (300) der Leiterstruktur (100) datentechnisch miteinander verbunden sind und
wobei die erste Gruppe (20) und zweite Gruppe (30) über die jeweiligen Querports (PQ) nach Art einer Leitersprosse (500, 600, 700, 800, 900) der Leiterstruktur (100) datentechnisch miteinander verbunden sind.

5. Kommunikationssystem nach Anspruch 4,
**dadurch gekennzeichnet, dass**
die Netzwerkkomponenten eingerichtet sind, eine Redundanzumschaltung anhand einer empfangenen Statusnachricht auszuführen (C), bei welcher mittels der Netzwerkkomponenten ein Kommunikationspfad (13) für eine datentechnische Verbindung zwischen zwei Netzwerkkomponenten (61, 71) gewählt wird (C1), welcher eine ausgefallene datentechnische Verbindung zwischen den zwei Netzwerkkomponente über die Leiterstruktur (100) umgeht.

6. Kommunikationssystem nach wenigstens einem der vorhergehenden Ansprüche,
**dadurch gekennzeichnet, dass**
das Kommunikationsnetzwerk (2) ein Netzwerk eines spurgebundenen Fahrzeugs (3), welches mehrere Wagen (5, 6, 7, 8, 9) umfasst, ist,
in jedem Wagen (5, 6, 7, 8, 9) ist ein Paar (50, 60, 70, 80, 90) von Netzwerkkomponenten angeordnet ist, wobei das jeweilige Paar eine Netzwerkkomponente der ersten Gruppe (20) und eine Netzwerkkomponente der zweiten Gruppe (30) umfasst, die über die Querports (PQ) datentechnisch miteinander verbunden sind.

7. Kommunikationssystem nach Anspruch 6,
**dadurch gekennzeichnet, dass**
das Kommunikationsnetz als Steuerungsnetz sowie als Betreibernetz des spurgebundenen Fahrzeugs (3) dient.

8. Spurgebundenes Fahrzeug (3) mit einem Kommunikationsnetzwerk (2) nach wenigstens einem der vorhergehenden Ansprüche 2 bis 7.

9. Kommunikationsverfahren zum Betreiben eines Kommunikationsnetzwerks (2), welches eine erste Gruppe (20) von Netzwerkkomponenten (51, 61, 71, 81, 91) und eine zweite Gruppe (30) von Netzwerkkomponenten (52, 62, 72, 82, 92) umfasst, wobei die Netzwerkkomponenten jeweils
- einen Port (P1) und einen weiteren Port (P3), über die jeweils eine Netzwerkkomponente derselben ersten oder zweiten Gruppe (20, 30) datentechnisch verbunden ist, aufweisen, und **gekennzeichnet sind durch**
- einen Querport, über den eine Netzwerkkomponente der jeweiligen anderen Gruppe (30, 20) datentechnisch verbunden ist,
wobei die Netzwerkkomponenten jeweils in regelmäßigen zeitlichen Abständen eine Statusnachricht aussenden (A),
wobei die Statusnachricht (ST) eine Portzustandsinformation (PZ) enthält, welche einen Portzustand (F, D) des Ports (P1), einen Portzustand des weiteren Ports (P3) und einen Portzustand des Querports (PQ) repräsentiert.

10. Computerprogrammprodukt, umfassend Befehle, die bei der Ausführung durch eine Recheneinrichtung diese veranlassen, das Kommunikationsverfahren nach Anspruch 9 auszuführen.

11. Bereitstellungsvorrichtung für das Computerprogrammprodukt nach Anspruch 10, wobei die Bereitstellungsvorrichtung das Computerprogrammprodukt speichert und/oder bereitstellt.

## Claims

1. Network component of a first or second group of network components, comprising:
- a port (P1) and a further port (P3), which in each case are configured to provide a connection in terms of data to a network component of the same first or second group (20, 30), **characterised by**
- a cross-port (PQ), which is configured to provide a connection in terms of data to a network component of the other group (30, 20) in each case,
wherein
the network component (51, 52, 61, 62, 71, 72, 81, 82, 91, 92) is configured to emit (A) a status message (ST) at regular temporal intervals in each case,
wherein the status message (ST) contains an item of port status information, which represents a port status (F, D) of the port (P1), a port status of the further port (P3) and a port status of the cross-port (PQ).

2. Communication system with a communication network (2), which comprises a first group (20) of network components (51, 61, 71, 81, 91) and a second group (30) of network components (52, 62, 72, 82, 92), wherein the network components in each case are defined according to claim 1.

3. Communication system according to claim 2,
**characterised in that**
the respective network component is configured to emit the status message at the port (P1), at the further port (P3) and the cross-port (PQ) and
the status message (ST) contains
- a network component number, which identifies the network component, and
- a port number, which identifies the port (P1), the further port (P3) or cross-port (PQ) of the network component, from which the status message is sent.

4. Communication system according to claim 2 or 3,
**characterised in that**
the network components are interconnected in terms of data according to a ladder structure,
wherein the first group are interconnected in terms of data in the manner of a first rail (200) of the ladder structure (100) and the second group are interconnected in terms of data in the manner of a second rail (300) of the ladder structure (100), and
wherein the first group (20) and second group (30) are interconnected in terms of data via the respective cross-port (PQ) in the manner of a rung (500, 600, 700, 800, 900) of the ladder structure (100).

5. Communication system according to claim 4,
**characterised in that**
the network components are configured to carry out (C) a redundancy switchover on the basis of a received status message, in which a communication path (13) for a connection in terms of data between two network components (61, 71) is chosen (C1) by means of the network components, which bypasses a failed connection in terms of data between the two network components via the ladder structure (100).

6. Communication system according to at least one of the preceding claims,
**characterised in that**
the communication network (2) is a network of a rail-bound vehicle (3), which comprises multiple cars (5, 6, 7, 8, 9), a pair (50, 60, 70, 80, 90) of network components is arranged in each car (5, 6, 7, 8, 9), wherein the respective pair comprises a network component of the first group (20) and a network component of the second group (30), which are interconnected in terms of data via the cross-ports (PQ).

7. Communication system according to claim 6,
**characterised in that**
the communication network is used as a control network as well as an operator network of the rail-bound vehicle (3).

8. Rail-bound vehicle (3) with a communication network (2) according to at least one of the preceding claims 2 to 7.

9. Communication method for operating a communication network (2), which comprises a first group (20) of network components (51, 61, 71, 81, 91) and a second group (30) of network components (52, 62, 72, 82, 92), wherein the network components in each case have
- a port (P1) and a further port (P3), via which in each case a network component of the same first or second group (20, 30) is connected in terms of data, and are **characterised by**
- a cross-port (PQ), via which a network component of the respective other group (30, 20) is connected in terms of data,
wherein
the network components in each case emit (A) a status message at regular temporal intervals,
wherein the status message (ST) contains an item of port status information (PZ), which represents a port status (F, D) of the port (P1), a port status of the further port (P3) and a port status of the cross-port (PQ).

10. Computer program product, comprising commands which, when executed by a computing facility, prompt said computing facility to carry out the communication method according to claim 9.

11. Provision apparatus for the computer program product according to claim 10, wherein the provision apparatus stores and/or provides the computer program product.

## Revendications

1. Composant de réseau d'un premier ou deuxième groupe de composants de réseau, comprenant :
- un accès (P1) et un autre accès (P3), qui sont agencés respectivement pour donner une liaison en technique de données avec un composant de réseau du même premier ou deuxième groupe (20, 30), **caractérisé par**
- un accès (PQ) transversal, qui est agencé pour donner une liaison technique de données avec un composant de réseau de l'autre groupe (30, 20) respectif,
dans lequel
le composant (51, 52, 61, 62, 71, 72, 81, 82, 91, 92) de réseau est agencé pour envoyer (A) un message (ST) de statut respectivement à des distances régulières dans le temps,
dans lequel le message (ST) de statut contient une information d'état d'accès, qui représente un état (F, D) de l'accès (P1), un état de l'autre accès (P3) et un état de l'accès (PQ) transversal.

2. Système de communication comprenant un réseau (2) de communication, qui comprend un premier groupe (20) de composants (51, 61, 71, 81, 91) de réseau et un deuxième groupe (30) de composants (52, 62, 72, 82, 92) de réseau, dans lequel les composants de réseau sont définis respectivement suivant la revendication 1.

3. Système de communication suivant la revendication 2, **caractérisé en ce que**
le composant respectif de réseau est agencé pour envoyer le message de statut à l'accès (P1), à l'autre accès (P3) et à l'accès (PQ) transversal, et
le message (ST) de statut contient
- un numéro de composant de réseau, qui identifie le composant de réseau, et
- un numéro d'accès, qui identifie l'accès (P1), l'autre accès (P3) ou l'accès (PQ) transversal du composant de réseau, dont est issu le message de statut.

4. Système de communication suivant la revendication 2 ou 3, **caractérisé en ce que**
les composants de réseau sont reliés entre eux en technique de données suivant une structure en échelle,
dans lequel le premier groupe, à la manière d'un premier montant (200) d'échelle de la structure (100) en échelle et le deuxième groupe, à la manière d'un deuxième montant (300) d'échelle de la structure (100) en échelle, sont reliés entre eux en technique de données, et
dans lequel le premier groupe (20) et le deuxième groupe (30) en échelle de la structure (100) sont reliés entre eux en technique de données par l'accès (PQ) transversal respectif à la manière d'un barreau (500, 600, 700, 800, 900) d'échelle.

5. Système de communication suivant la revendication 4,
**caractérisé en ce que**
les composants de réseau sont agencés pour exécuter (C) une commutation redondante à l'aide d'un message de statut reçu, dans laquelle, au moyen des composants de réseau, il est sélectionné (C1) un chemin (13) de commutation pour une liaison en technique de données entre deux composants (61, 71) de réseau, qui contourne une liaison défaillante en technique de réseau entre les deux composants de réseau en passant par la structure (100) en échelle.

6. Système de communication suivant au moins l'une des revendications précédentes,
**caractérisé en ce que**
le réseau (2) de communication est un réseau d'un véhicule (3) guidé sur rail, qui comprend plusieurs voitures (5, 6, 7, 8, 9), il est disposé, dans chaque voiture (5, 6, 7, 8, 9), une paire (50, 60, 70, 80, 90) de composants de réseau, dans lequel la paire respective comprend un composant de réseau du premier groupe (20) et un composant de réseau du deuxième groupe (30), qui sont reliés entre eux en technique de données par l'accès (PQ) transversal.

7. Système de communication suivant la revendication 6,
**caractérisé en ce que**
le réseau de communication sert de réseau de commande, ainsi que de réseau exploitant du véhicule (3) guidé sur rail.

8. Véhicule (3) guidé sur rail comprenant un réseau (2) de communication suivant au moins l'une des revendications 2 à 7 précédentes.

9. Procédé de communication pour faire fonctionner un réseau (2) de communication, qui comprend un premier groupe (20) de composants (51, 61, 71, 81, 91) de réseau et un deuxième groupe (30) de composants (52, 62, 72, 82, 92) de réseau, dans lequel les composants de réseau ont respectivement
- un accès (P1) et un autre accès (P3), par lesquels respectivement un composant de réseau du même premier ou deuxième groupe (20, 30) est connecté, en technique de données, et **caractérisé par**
- un accès transversal, par lequel un composant de réseau de l'autre groupe (30, 20) respectif est connecté en technique de données,
dans lequel
les composants de réseau émettent (A), respectivement, à des intervalles de temps réguliers, un message de statut,
dans lequel le message (ST) de statut comporte une information (PZ) d'état d'accès, qui représente un état (F, D) de l'accès (P1), un état de l'autre accès (P3) et un état de l'accès (PQ) transversal.

10. Produit de programme d'ordinateur, comprenant des instructions qui, lors de l'exécution par un dispositif informatique, font que celui-ci exécute le procédé de communication suivant la revendication 9.

11. Dispositif de mise à disposition du produit de programme d'ordinateur suivant la revendication 10, dans lequel le dispositif de mise à disposition met en mémoire et/ou à disposition le produit de programme d'ordinateur.
